# EUROPÄISCHE PATENTSCHRIFT

(11) **EP 2 675 031 B1**
(45) Veröffentlichungstag und Bekanntmachung des Hinweises auf die Patenterteilung: **29.03.2017**
(21) Anmeldenummer: 13004115.5
(22) Anmeldetag: 07.01.2010
(51) Int. Cl.: H02H 9/04, H02H 3/04

(54) **Überspannungsschutzelement**
Overvoltage protection element
Element de protection de surtension

(30) Priorität: 12.01.2009 DE 102009004673
(43) Veröffentlichungstag der Anmeldung: 18.12.2013
(62) Teilanmeldung aus: 10701449.0
(73) Patentinhaber: PHOENIX CONTACT GmbH & Co. KG, 32825 Blomberg (DE)
(72) Erfinder: Plötzsch, Bernd, 32756 Detmold (DE); Brand, Friedrich-Eckhard, 32683 Barntrup (DE); Pförtner, Steffen, 31832 Springe (DE)
(74) Vertreter: Gesthuysen Patent- und Rechtsanwälte

(56) Entgegenhaltungen:
- EP-A2- 1 562 272
- DE-A1- 19 700 779
- DE-A1-102007 021 190
- US-A- 4 586 104

## Beschreibung

Die Erfindung betrifft ein Überspannungsschutzelement gemäss Anspruch 1.

Der Überspannungsschutz kann in unterschiedliche Einsatzgebiete aufgeteilt werden. Dabei unterscheidet man insbesondere zwischen Überspannungsschutz für die Stromversorgung, für die Mess-, Steuer- und Regeltechnik (MSR-Technik) und für die Informationstechnik und Telekommunikation. Schnittstellen der MSR-Technik sind gegen Überspannungen weitaus empfindlicher als Stromversorgungssysteme. Für den Überspannungsschutz werden daher im MSR-Bereich zumeist Überspannungsschutzelemente mit kombinierten Schutzschaltungen verwendet, wobei mindestens ein überspannungsbegrenzendes Bauelement dem Grobschutz und mindestens ein überspannungsbegrenzendes Bauelement dem Feinschutz dient. Häufig wird dabei eine indirekte Parallelschaltung eines gasgefüllten Überspannungsableiters und einer Suppressor-Diode verwendet, wobei zwischen dem gasgefüllten Überspannungsableiter und der Suppressor-Diode ein Entkopplungswiderstand angeordnet ist.

Die bekannten Überspannungsschutzelemente sind häufig als "Schutzstecker" ausgebildet, die zusammen mit einem Geräteunterteil ein Überspannungsschutzgerät bilden. Zur Installation eines derartigen Überspannungsschutzgeräts sind am Geräteunterteil entsprechende Anschlussklemmen für die einzelnen Leiter vorgesehen. Zur einfachen mechanischen und elektrischen Kontaktierung des Geräteunterteils mit dem jeweiligen Überspannungsschutzelement sind bei dem Überspannungsschutzelement die Anschlusselemente als Steckerstifte ausgebildet, zu denen im Geräteunterteil korrespondierende, mit den Anschlussklemmen verbundene Steckerbuchsen angeordnet sind, so dass das Überspannungsschutzelement einfach auf das Geräteunterteil aufsteckbar ist.

Bei derartigen Überspannungsschutzgeräten ist die Installation und Montage durch die Steckbarkeit des Überspannungsschutzelements sehr einfach und zeitsparend durchführbar. Zusätzlich weisen derartige Überspannungsschutzgeräte teilweise noch eine Fernmeldung, als Signalgeber des Zustands des Überspannungsschutzelements, die üblicherweise als Wechselkontakt ausgeführt ist, sowie eine optische Zustandsanzeige im Überspannungsschutzelement auf. Über die Zustandsanzeige wird angezeigt, ob das in dem Überspannungsschutzelement angeordnete überspannungsbegrenzende Bauelement noch funktionstüchtig ist oder nicht. Als überspannungsbegrenzendes Bauelement werden je nach Einsatzzweck des Überspannungsschutzelements Varistoren, gasgefüllte Überspannungsableiter, Funkenstrecken oder Dioden, insbesondere Suppressor-Dioden eingesetzt.

Aufgrund von Alterung, Vorschädigung durch Ableitvorgänge und zeitweise auftretenden Überspannungen (TOV) im Sekundenbereich kommt es insbesondere bei Überspannungsschutzelementen mit einem Varistor als überspannungsbegrenzendes Bauelement zu einer unerwünschten Erhöhung des Leckstromes des Varistors bei Betriebsspannungen. Überspannungsschutzelemente mit einem Varistor als Ableiter weisen daher heutzutage häufig eine thermische Abtrennvorrichtung auf, durch die ein nicht mehr einwandfrei funktionsfähiger Varistor elektrisch von dem zu überwachenden Strompfad abgetrennt wird. Darüber hinaus werden thermische Abtrennvorrichtungen auch bei Überspannungsschutzelementen mit Funkenstrecken als Ableiter verwendet.

Eine derartiges Überspannungsschutzelement ist beispielsweise aus der DE 20 2004 006 227 U1 bekannt. Bei dem bekannten Überspannungsschutzelement erfolgt die Überwachung des Zustands eines überspannungsbegrenzenden Bauelements, insbesondere eines Varistors, nach dem Prinzip eines Temperaturschalters, so dass bei Überhitzung des Varistors eine zwischen dem Varistor und einem Trennelement vorgesehene Lötverbindung aufgetrennt wird, was zu einem elektrischen Abtrennen des Varistors führt. Außerdem wird beim Auftrennen der Lötverbindung ein Kunststoffelement durch die Rückstellkraft einer Feder aus einer ersten Position in eine zweite Position geschoben, in der das als federnde Metallzunge ausgebildete Trennelement durch das Kunststoffelement thermisch und elektrisch vom Varistor getrennt ist. Da das Kunststoffelement zwei nebeneinander angeordnete farbige Markierungen aufweist, fungiert es zusätzlich auch als optische Zustandsanzeige, wodurch der Zustand des Überspannungsschutzelements direkt vor Ort einfach abgelesen werden kann. Durch eine derartige integrierte Anzeige kann jedoch nur ein Defekt des Überspannungsschutzelements signalisiert werden.

Da Überspannungsschutzgeräte hohen Stoßstrombelastungen ausgesetzt sind, können die einzelnen überspannungsbegrenzenden Bauelemente in Abhängigkeit von der Höhe und Häufigkeit der Beanspruchungen Schaden nehmen, so dass die Funktionstüchtigkeit der Überspannungselemente regelmäßig kontrolliert werden sollte. Zur Kontrolle der Funktionstüchtigkeit steckbarer Überspannungsschutzelemente wird von der Anmelderin ein tragbares Ableiterprüfgerät unter dem Namen "CHECKMASTER" vertrieben (Katalog TRABTECH 2007, Seite 166 bis 173), das eine Prüfaufnahme aufweist, in die der jeweils zu prüfende Schutzstecker eingesteckt werden kann. Dabei werden die aktuellen elektrischen Parameter der überspannungsbegrenzenden Bauelemente ermittelt und mit Referenzwerten verglichen, wobei durch eine Toleranzwertmessung stark belastete Bauelemente als vorgeschädigt identifiziert werden. Das Ableiterprüfgerät ermöglicht somit - zusätzlich zur Anzeige eines defekten Überspannungsschutzelements - auch eine Vorsorgeuntersuchung eines Überspannungsschutzelements. Nachteilig ist jedoch, dass hierzu das Überspannungsschutzelement von dem Geräteunterteil abgenommen werden muss, so dass ein Test während des Betriebs nicht möglich ist.

Die DE 10 2007 021 190 A1 offenbart ein Gerät zum Schutz von Datenleitungen gegen Überspannungen mit mehreren Eingängen und mehreren Ausgängen für die Datenleitungen, wobei zwischen die Ein- und Ausgänge der Datenleitungen eine Überspannungsschutzschaltung mit Gasableitern und einer Suppressor-Diode geschaltet ist. Gemäß der Lehre dieser Druckschrift weist die Teilschaltung, in die die Suppressor-Diode integriert ist, einen ersten Schutz-Schaltkreis, mittels dessen die Suppressor-Diode an die Datenleitungen angeschlossen ist, und einen zweiten Schaltkreis auf, der als Prüfschaltkreis dient, wobei die beiden Schaltkreise mittels eines Schalters alternativ aktivierbar sind. Ist der Prüfschaltkreis aktiviert, so ist die Suppressor-Diode von den Datenleitungen abgetrennt. Die Aktivierung des Schalters erfolgt mit einem Schaltstift, der durch eine Gehäuseöffnung in das Überspannungsschutzgerät eingesteckt wird. Bei gestecktem Schaltstift ist die Suppressor-Diode an den Prüfschaltkreis angeschlossen, wobei dann eine Prüfung der Suppressor-Diode vorgenommen werden kann, indem an den Schaltstift ein Prüfgerät mit einer Spannungsversorgung zur Erzeugung eines Prüfstromes angeschlossen wird. Nachteilig ist jedoch auch hierbei, dass zur Überprüfung die Suppressor-Diode von den Datenleitungen getrennt werden muss.

Der vorliegenden Erfindung liegt daher die Aufgabe zugrunde, ein eingangs beschriebenes Überspannungsschutzelement zur Verfügung zu stellen, das eine Kontrolle der Funktionstüchtigkeit und des Zustandes des Überspannungsschutzelements während des Betriebs ermöglicht.

Diese Aufgabe ist bei dem eingangs beschriebenen Überspannungsschutzelement dadurch gelöst, dass an die Suppressor-Diode ein Kapazitäts-Messgerät angeschlossen ist, wobei durch das Kapazitäts-Messgerät die Kapazität bzw. eine Kapazitätsänderung der Suppressor-Diode erfasst wird, ohne dass die Funktion der Suppressor-Diode als überspannungsbegrenzendes Bauelement beeinfluss wird. Als Kapazitäts-Messgerät kann beispielsweise ein Oszillator verwendet werden.

Durch die Anordnung der Suppressor-Diode im Brückenzweig einer Dioden-Brückenschaltung ist eine Messung der Kapazität bzw. einer Kapazitätsänderung der Suppressor-Diode möglich, ohne dass die Funktion der Suppressor-Diode als überspannungsbegrenzendes Bauelement beeinflusst wird. Die Veränderung der Kapazität der Suppressor-Diode ist dabei ein Zeichen für eine Veränderung der Suppressor-Diode und damit für eine erfolgte Belastung der Suppressor-Diode.

Vorteilhafterweise weisen die vier Dioden der Dioden-Brückenschaltung jeweils eine deutlich niedrigere Kapazität als die Suppressor-Diode auf. Dadurch wird die Gesamtkapazität der Dioden-Brückenschaltung verringert, wodurch eine höhere maximale Signalfrequenz des angeschlossenen Stromkreises ermöglicht wird.

Gemäß einer vorteilhaften Ausgestaltung des erfindungsgemäßen Überspannungsschutzelements ist mindestens eine optische Zustandsanzeige für das mindestens eine überspannungsbegrenzende Bauelement im Gehäuse angeordnet, so dass der Zustand des Überspannungsschutzelements bzw. eines überspannungsbegrenzenden Bauelements direkt vor Ort angezeigt werden kann. Die Zustandsanzeige kann dabei vorzugsweise drei Bereiche mit unterschiedlichen Markierungen, insbesondere drei Bereiche mit unterschiedlichen Farben, beispielsweise grün, gelb und rot aufweisen, so dass nicht nur der Defekt eines überspannungsbegrenzenden Bauelements sondern bereits eine Vorschädigung angezeigt werden kann. Weist das Überspannungsschutzelement mehrere überspannungsbegrenzende Bauelemente auf, so ist für jedes Bauelement dessen Zustand separat anzeigbar.

Gemäß einer weiteren vorteilhaften Ausgestaltung der Erfindung weist das Überspannungsschutzelement neben der optischen Zustandsanzeige auch einen Fernmeldekontakt zur Fernmeldung des Zustands des Überspannungsschutzelements bzw. der Zustände der einzelnen überspannungsbegrenzenden Bauelemente auf.

Im einzelnen gibt es nun eine Vielzahl von Möglichkeiten, das erfindungsgemäße Überspannungsschutzelement auszugestalten und weiterzubilden. Dazu wird verwiesen sowohl auf die dem Patentanspruche 1 nachgeordneten Patentansprüche als auch auf die nachfolgende Beschreibung von Ausführungsbeispiele in Verbindung mit der Zeichnung. In der Zeichnung zeigen
- Fig. 1: eine vereinfachtes Schaltbild einer ersten Ausführungsvariante eines Überspannungsschutzelements,
- Fig. 2: eine vereinfachtes Schaltbild einer zweiten Ausführungsvariante eines Überspannungsschutzelements, und
- Fig. 3: eine vereinfachtes Schaltbild einer Ausführungsvariante eines erfindungsgemäßen Überspannungsschutzelements.

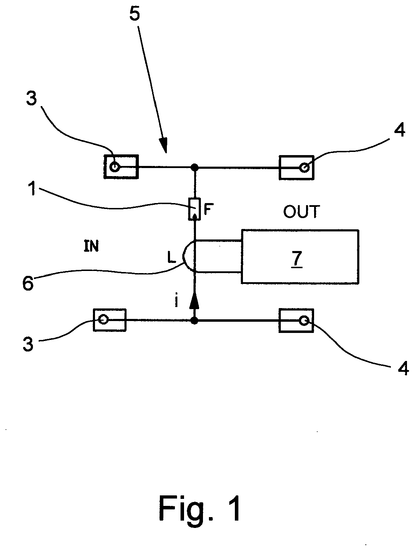

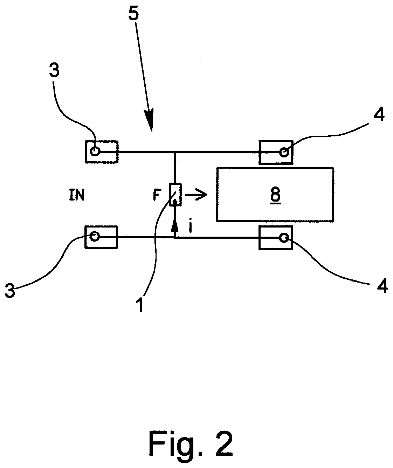

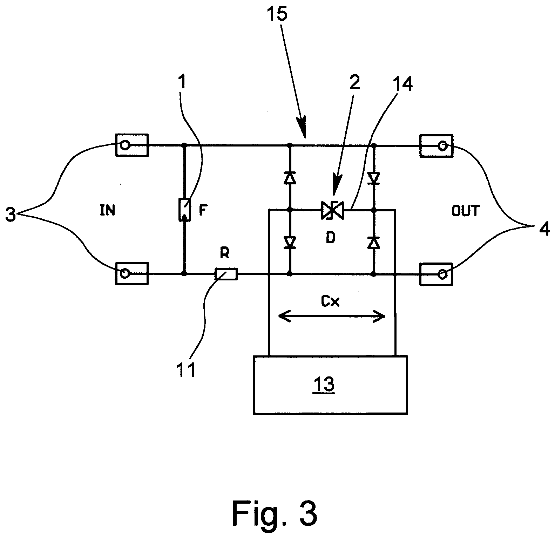

Die Figuren zeigen jeweils ein vereinfachtes Schaltbild verschiedener Ausführungsvarianten von Überspannungsschutzelementen, wobei in den Schaltbildern jeweils nur das bzw. die überspannungsbegrenzenden Bauelemente sowie ein Überwachungsbauelement dargestellt sind. Die Fig. 1 und 2 zeigen dabei jeweils ein Ausführungsbeispiel, bei dem als überspannungsbegrenzendes Bauelement ein gasgefüllter Überspannungsableiter 1 vorgesehen ist. Bei dem Ausführungsbeispiel gemäß den Fig. 3 ist zusätzlich zu einem gasgefüllten Überspannungsableiter 1 als Grobschutz noch eine Suppressor-Diode 2 als Feinschutz vorgesehen. Die in den Figuren dargestellten vereinfachten Schaltungen weisen jeweils zwei Eingangsanschlüsse 3 zum Anschluss zweier Leitungen und zwei Ausgangsanschlüsse 4 zum Anschluss des zu schützenden Geräts, beispielsweise eines Sensors oder einer Steuerung, auf. Weitere Anschlüsse, insbesondere eine Masseanschluss können vorgesehen sein, auch wenn sie in den Figuren nicht dargestellt sind.

Den Ausführungsbeispielen gemäß den Fig. 1 und 2 ist gemeinsam, dass dem gasgefüllten Überspannungsableiter 1 ein Überwachungsbauelement zugeordnet ist, das einen über den gasgefüllten Überspannungsableiter 1 fließenden Strom i erfasst. Das in Abhängigkeit vom Strom i von dem Überwachungsbauelement erzeugte Signal wird in einer - hier nicht dargestellten - Auswerteeinheit ausgewertet, wobei die Auswerteeinheit bei den Ausführungsbeispielen gemäß den Fig. 1 und 2 galvanisch von dem Ableitstrompfad 5, über den der Strom i durch den gasgefüllten Überspannungsableiter 1 fließt, getrennt ist.

Bei dem Ausführungsbeispiel gemäß Fig. 1 ist das Überwachungsbauelement eine Spule 6, die induktiv mit dem Ableitstrompfad 5 gekoppelt ist, so dass von der Spule 6 ein Strom i durch den gasgefüllten Überspannungsableiter 1 erfasst wird. Die Spule 6 ist mit einem Integrator 7 verbunden, wodurch die Energie des Stromimpulses durch den gasgefüllten Überspannungsableiter 1 ermittelt werden kann. Aus der Impulsenergie lässt sich die Belastung des gasgefüllten Überspannungsableiters 1 durch den Ableitstrom i bestimmen.

Bei dem Ausführungsbeispiel gemäß Fig. 2 wird ein Fotoelement 8 als Überwachungsbauelement verwendet, wobei das Fotoelement 8 derart benachbart zum gasgefüllten Überspannungsableiter 1 angeordnet ist, dass von dem Fotoelement 8 ein beim Anliegen einer Überspannung im gasgefüllten Überspannungsableiter 1 anstehender Lichtbogen erfasst wird. Durch eine geeignete Signalverarbeitung ist es möglich, anhand des von dem Fotoelement 8 detektierten Lichtbogens die Intensität und die Dauer des Ableitvorganges und damit ein Maß für die Belastung des gasgefüllten Überspannungsableiters 1 zu ermitteln.

Fig. 3 zeigt eine Ausführungsvariante eines Überspannungsschutzelements mit einem gasgefüllten Überspannungsableiter 1 und einer Suppressor-Diode 2, bei der der Zustand der Suppressor-Diode 2 dadurch überprüft wird, dass die Kapazität Cₓ bzw. eine Kapazitätsänderung der Suppressor-Diode 2 erfasst wird, wozu an die Suppresssor-Diode 2 ein Kapazitäts-Messgerät 13, beispielsweise ein Oszillator und/oder ein Mikrocontroller, angeschlossen ist. Wie aus Fig. 3 ersichtlich ist, ist die Suppressor-Diode 2 im Brückenzweig 14 einer vier Dioden aufweisenden Dioden-Brückenschaltung 15 angeordnet, wodurch eine Messung der Kapazität Cₓ möglich ist, ohne dass die Funktion der Suppressor-Diode 2 als überspannungsbegrenzendes Bauelement, nämlich als Feinschutz des Überspannungsschutzelements, beeinflusst wird. Die einzelnen Dioden der Dioden-Brückenschaltung 15 weisen eine wesentlich geringere Kapazität als die Suppressor-Diode 2 auf.

Auch wenn in den Fig. 1 bis 3 jeweils nur ein Überwachungsbauelement zur Kontrolle der Funktionstüchtigkeit eines überspannungsbegrenzenden Bauelements vorgesehen ist, so ist für den Fachmann ersichtlich, dass zur Überwachung mehrerer überspannungsbegrenzender Bauelemente auch mehrere gleiche oder unterschiedliche Überwachungsbauelemente vorgesehen sein können.

So ist es beispielsweise möglich, bei dem in der Fig. 3 dargestellten Überspannungsschutzelemente die Funktionstüchtigkeit des gasgefüllten Überspannungsableiters 1 mit einer Spule 6 gemäß Fig. 1 oder mit einem Fotoelement 8 gemäß Fig. 2 zu überwachen.

## Patentansprüche

1. Überspannungsschutzelement mit einem Gehäuse und mit mindestens einer in dem Gehäuse angeordneten Suppressor-Diode (2) als überspannungsbegrenzendes Bauelement, wobei die Suppressor-Diode (2) im Brückenzweig (14) einer Dioden-Brückenschaltung (15) angeordnet ist,
**dadurch gekennzeichnet,**
**dass** an die Suppressor-Diode (2) ein Kapazitäts-Messgerät angeschlossen ist, wobei durch das Kapazitäts-Messgerät (13) die Kapazität bzw. eine Kapazitätsänderung der Suppressor-Diode (2) erfasst wird, ohne dass die Funktion der Suppressor-Diode (2) als überspannungsbegrenzendes Bauelement beeinflusst wird.

2. Überspannungsschutzelement nach Anspruch 1, **dadurch gekennzeichnet, dass** als Kapazitäts-Messgerät (13) ein Oszillator und/oder ein Mikrocontroller verwendet wird.

3. Überspannungsschutzelement nach Anspruch 1 oder 2, **dadurch gekennzeichnet, dass** die Dioden der Dioden-Brückenschaltung (15) jeweils eine kleinere Kapazität als die Suppressor-Diode (2) aufweisen.

4. Überspannungsschutzelement nach einem der Ansprüche 1 bis 3, **dadurch gekennzeichnet, dass** eine optische Zustandsanzeige für das mindestens eine überspannungsbegrenzende Bauelement im Gehäuse angeordnet ist.

5. Überspannungsschutzelement nach einem der Ansprüche 1 bis 4, **dadurch gekennzeichnet, dass** ein Fernmeldekontakt zur Fernmeldung des Zustands des mindestens einen überspannungsbegrenzenden Bauelements im Gehäuse angeordnet ist.

## Claims

1. Overvoltage protector, comprising a housing and at least one suppressor diode (2) which is located in the housing as an overvoltage limiter, wherein the suppressor diode (2) is located in a bridge branch (14) of a diode bridge circuit (15)
**characterized in**
**that** a capacitance measurement device is connected to the suppressor diode (2), the capacitance measurement device (13) being adapted for detecting the capacitance or the capacitance change of the suppressor diode (2) without operation of the suppressor diode (2) as the overvoltage limiter being influenced.

2. Overvoltage protector according to claim 1, **characterized in that** an oscillator and/or a microcontroller is used as capacitance measurement device (13).

3. Overvoltage protector according to claim 1 or 2, **characterized in that** the diodes of the diode bridge circuit (15) each have a smaller capacitance than that of the suppressor diode (2).

4. Overvoltage protector according to any one of claims 1 to 3, **characterized in that** an optical state display for the least one overvoltage limiter is located in the housing.

5. Overvoltage protector according to any one of claims 1 to 4, **characterized in that** a telecommunications contact for remote indication of the state of the at least one overvoltage limiter is located in the housing.

## Revendications

1. Dispositif de protection contre les surtensions comportant un boîtier et au moins une diode de suppression (2) disposée dans le boîtier en tant que composant limitant les surtensions, dans lequel la diode de suppression (2) est disposée dans la branche de pont (14) d'un circuit en pont de diodes (15),
**caractérisé en ce**
**qu'**un appareil de mesure de capacité est raccordé à la diode de suppression (2), dans lequel la capacité ou une variation de capacité de la diode de suppression (2) est détectée par l'appareil de mesure de capacité (13) sans que le fonctionnement de la diode de suppression (2), en tant que composant limitant les surtensions, soit influencé.

2. Dispositif de protection contre les surtensions selon la revendication 1, **caractérisé en ce qu'**un oscillateur et/ou un microcontrôleur est utilisé en tant qu'appareil de mesure de capacité (13).

3. Dispositif de protection contre les surtensions selon la revendication 1 ou 2, **caractérisé en ce que** les diodes du circuit en pont de diodes (15) présentent respectivement une plus faible capacité que la diode de suppression (2).

4. Dispositif de protection contre les surtensions selon l'une quelconque des revendications 1 à 3, **caractérisé en ce qu'**un affichage d'état optique est prévu dans le boîtier pour l'au moins un composant limitant les surtensions.

5. Dispositif de protection contre les surtensions selon l'une quelconque des revendications 1 à 4, **caractérisé en ce qu'**il est prévu dans le boîtier un contact de télésignalisation de l'état de l'au moins un composant limitant les surtensions.
